# EUROPÄISCHE PATENTANMELDUNG

(11) **EP 4 759 776 A1**
(43) Veröffentlichungstag der Anmeldung: **17.06.2026**
(21) Anmeldenummer: 24220171.3
(22) Anmeldetag: 16.12.2024
(51) Int. Cl.: C03B 37/012

(54) **VERFAHREN ZUR HERSTELLUNG EINER VORFORM FÜR EINE OPTISCHE FASER**

(71) Anmelder: Heraeus Quarzglas GmbH & Co. KG, 63450 Hanau (DE)
(72) Erfinder: Schuster, Kay, 06803 Bitterfeld-Wolfen (DE); Lorenz, Michael, 06803 Bitterfeld-Wolfen (DE); Piel, Holger, 06803 Bitterfeld-Wolfen (DE)
(74) Vertreter: Heraeus IP

(57) **Zusammenfassung**

Die Erfindung betrifft ein Verfahren zur Herstellung einer Vorform für eine optische Faser sowie eine Vorform für eine optische Faser. Ein Verfahren zur Herstellung einer Vorform (1) für eine optische Faser umfasst ein Herstellen einer ersten Bohrung (3) in einem ersten Vorform-Abschnitt (6) ausgehend von einer ersten Endfläche (11) des ersten Vorform-Abschnitts (6), ein Herstellen einer zweiten Bohrung (4) in einem zweiten Vorform-Abschnitt (7) ausgehend von einer ersten Endfläche (11) des zweiten Vorform-Abschnitts (7), und ein Fügen des ersten Vorform-Abschnitts (6) und des zweiten Vorform-Abschnitts (7) derart, dass die erste Endfläche (11) des ersten Vorform-Abschnitts (6) und die erste Endfläche (11) des zweiten Vorform-Abschnitts (7) miteinander verbunden werden. So wird ermöglicht, unter Gewährleistung einer hohen Genauigkeit der Bohrung längere Vorformen für optische Fasern bereitzustellen.

## Beschreibung

Die Erfindung betrifft ein Verfahren zur Herstellung einer Vorform für eine optische Faser sowie eine Vorform für eine optische Faser.

Zur Herstellung optischer Fasern wird zunächst eine Vorform hergestellt, aus der anschließend optische Fasern hergestellt werden. Für die Herstellung der Vorform wird üblicherweise ein Zylinder gebohrt. Anschließend wird ein Kernstab in die Bohrung eingeführt. Es ist notwendig, die Bohrung sehr genau auszuführen, um die Anforderungen an die optischen Eigenschaften der herzustellenden optischen Faser zu erfüllen. Um die Länge einer Vorform zu erhöhen, können mehrere Vorform-Abschnitte miteinander verbunden bzw. gefügt werden.

Bisher ist es möglich, Bohrungen bis zu einer Länge von ungefähr 1,5 m mit der erforderlichen Genauigkeit auszuführen. Grundsätzlich ist es wünschenswert, längere Vorformen herzustellen. Mit herkömmlichen Verfahren ist es allerdings nicht möglich, längere Strecken zu bohren, da dann die Genauigkeit der Bohrung stark abnimmt. Einerseits wird der Bohrer mit steigender Länge schwerkraftbedingt nach unten gezogen, was zu einer Drift im Bohrloch führt. Andererseits führen auch andere Effekte zu einer Drift. Die Drift kann beispielsweise abhängen von der Drehrichtung des Bohrers, der Drehgeschwindigkeit des Bohrers und der Schwerkraftrichtung.

Druckschrift EP 3 115 344 B1 betrifft ein Herstellungsverfahren für eine Glasfaservorform, bei der eine Vielzahl von Kern-Vorformen und eine Vielzahl von Ummantelungs-Vorformen mit Durchgangslöchern hergestellt werden. Die Durchgangslöcher der Ummantelungs-Vorformen werden angepasst, um Verbindungslöcher herzustellen. Durch jedes Verbindungsloch werden mindestens zwei der Kern-Vorformen so nebeneinander eingeführt, dass ein Versatz zwischen den Verbindungsstellen der Kern-Vorformen und der Ummantelungs-Vorformen vorhanden ist.

Druckschrift US 11 370 689 B2 offenbart ein Vakuumverfahren zum Bilden einer Vorform für optische Fasern auf Rohrbasis. Eine Vorformanordnung definiert eine dichte Innenkammer, an die ein Vakuum angelegt wird. Es erfolgt ein Erhitzen der Anordnung unter Vakuum bis knapp über den Erweichungspunkt des Glases, um die Vorform zu verfestigen.

Es ist die Aufgabe der Erfindung, bei Gewährleistung einer hohen Genauigkeit der Bohrung längere Vorformen für optische Fasern zu ermöglichen.

Die Aufgabe wird gelöst durch das Verfahren gemäß Anspruch 1 sowie durch die Vorform gemäß Anspruch 15. Vorteilhafte Ausgestaltungen sind in den Unteransprüchen angegeben.

Zur Lösung der Aufgabe dient ein Verfahren zur Herstellung einer Vorform für eine optische Faser. Das Verfahren umfasst ein Herstellen einer ersten Bohrung in einem ersten Vorform-Abschnitt ausgehend von einer ersten Endfläche des ersten Vorform-Abschnitts. Das Verfahren umfasst ein Herstellen einer zweiten Bohrung in einem zweiten Vorform-Abschnitt ausgehend von einer ersten Endfläche des zweiten Vorform-Abschnitts. Das Verfahren umfasst ferner ein Fügen des ersten Vorform-Abschnitts und des zweiten Vorform-Abschnitts derart, dass die erste Endfläche des ersten Vorform-Abschnitts und die erste Endfläche des zweiten Vorform-Abschnitts miteinander verbunden werden.

Es werden die Endflächen miteinander verbunden, an denen die jeweilige Bohrung beginnt. Am Beginn kann die Bohrung mit besonderer Genauigkeit durchgeführt werden. Es findet keinerlei Beeinflussung durch eine Drift des Bohrers statt. Somit kann die Position einer jeweiligen Bohrung im Querschnitt des jeweiligen Vorform-Abschnitts sehr präzise hergestellt werden. Nach dem Fügen stimmen die Positionen der Bohrungen beider Vorform-Abschnitte im Kontaktbereich der zwei Vorform-Abschnitte dann sehr genau überein.

Das Verfahren betrifft die Herstellung einer Vorform für eine optische Faser, also eine Lichtleitfaser, insbesondere zur Telekommunikation. Es kann sich um eine Kernfaser mit einem einzelnen Kern handeln oder um eine Multikernfaser, also eine Faser mit mehreren Kernen. Mit anderen Worten wird eine Lichtleitfaser-Vorform bereitgestellt. Die Vorform ist insbesondere aus Glas wie z. B. Quarzglas hergestellt.

Die Bohrung wird durch Bohren hergestellt, insbesondere unter Verwendung eines Bohrers. Die Bohrung ist insbesondere eine Durchgangsbohrung. Die Bohrung kann das Herstellen einer Sackbohrung und insbesondere das Abtrennen eines nicht durchbohrten Endes des jeweiligen Vorform-Abschnitts umfassen, beispielsweise durch Sägen. Auf diese Weise kann eine Durchgangsbohrung hergestellt werden. Das Bohren erfolgt insbesondere als stoßendes Bohren, also mittels Vorschieben eines freien Endes des Bohrers in den jeweiligen Vorform-Abschnitt. Das Bohren kann grundsätzlich auch als ziehendes Bohren erfolgen.

Eine Bohrung verläuft insbesondere entlang der Längsrichtung des Vorform-Abschnitts. Beispielsweise verläuft eine Bohrung entlang der Mittellängsachse des Vorform-Abschnitts oder parallel zu der Mittellängsachse in einem Abstand zur Mittellängsachse.

Es wird jeweils ausgehend von einer ersten Endfläche gebohrt. Das bedeutet, dass die Bohrung an der ersten Endfläche beginnt. Insbesondere kommt der Bohrer an der ersten Endfläche erstmalig in Kontakt mit dem Vorform-Abschnitt. Insbesondere durchdringt der Bohrer die erste Endfläche und bewegt sich dann weiter parallel zur Mittellängsachse durch den jeweiligen Vorform-Abschnitt. Insbesondere erfolgt das Bohren, bis der Bohrer eine Position vor der an der gegenüberliegenden Seite befindlichen zweite Endfläche des jeweiligen Vorform-Abschnitts erreicht hat. Insbesondere sind die erste Bohrung im ersten Vorform-Abschnitt und die zweite Bohrung im zweiten Vorform-Abschnitt an einander entsprechenden Positionen angeordnet. Somit ergibt sich nach dem Fügen eine durchgehende Bohrung bzw. ein durchgehender Hohlraum in der Vorform.

Insbesondere ist ein jeweiliger Vorform-Abschnitt länglich. Eine Endfläche ist insbesondere eine Stirnseite des jeweiligen Vorform-Abschnitts. Eine Endfläche kann grundsätzlich teilweise oder vollständig gerade, schräg und/oder gekrümmt sein. Zwei Vorform-Abschnitte können dieselbe Länge oder unterschiedliche Längen aufweisen. Beispielsweise kann ein Vorform-Abschnitt eine Länge von 1000 mm aufweisen und ein weiterer Vorform-Abschnitt eine Länge von 1500 mm. Insbesondere gleichen sich zwei Vorform-Abschnitte hinsichtlich ihres Querschnitts und/oder ihres Durchmessers. Der Durchmesser der zwei Vorform-Abschnitte kann geringfügige produktionsbedingte Abweichungen aufweisen, die üblicherweise geringer als 0,5 mm sind, bevorzugt geringer als 0,3 mm. Dies kann durch Abweichungen und/oder Toleranzen beim Schleifen der Vorform-Rohlinge bedingt sein. Werden die zwei Vorform-Abschnitte durch Teilen eines Vorform-Rohlings hergestellt, wie weiter unten beschrieben, sind die Durchmesser typischerweise gleich.

Die Reihenfolge, in der die erste und zweite Bohrung hergestellt werden, ist unerheblich. Die zwei Bohrungen können nacheinander oder zumindest zeitabschnittsweise zeitgleich hergestellt werden. Insbesondere erfolgt anschließend das Fügen.

Durch das Fügen wird aus den zwei Vorform-Abschnitten eine Vorform zusammengesetzt bzw. hergestellt. Es werden die jeweiligen ersten Endflächen verbunden. Die zweiten Endflächen befinden sich nach dem Fügen an den gegenüberliegenden Seiten der Vorform. Die resultierende Vorform hat insbesondere denselben Durchmesser wie jeder einzelne Vorform-Abschnitt. Die Länge der Vorform kann der Summe der Länge der einzelnen Vorform-Abschnitte entsprechen. Umfasst das Herstellen der Vorform beispielsweise die Herstellung einer Sackbohrung und ein anschließendes Abtrennen eines Endes, kann die Länge der Vorform geringer sein als die Summe der Länge der einzelnen Vorform-Abschnitte. Ein oder zwei nicht durchbohrte Enden können vor und/oder nach dem Fügen abgetrennt werden. Es kann beispielsweise eine Länge von maximal 100 mm abgetrennt werden.

In einer Ausgestaltung ist der erste Vorform-Abschnitt zylinderförmig. In einer Ausgestaltung ist der zweite Vorform-Abschnitt zylinderförmig. Der Querschnitt des jeweiligen Vorform-Abschnitts ist demnach über die gesamte Längserstreckung gleich. In einer Ausführungsform ist der erste Vorform-Abschnitt und/oder der zweite Vorform-Abschnitt kreiszylinderförmig.

In einer Ausführungsform hat der erste Vorform-Abschnitt und/oder der zweite Vorform-Abschnitt eine kreiszylinderförmige Grundform. Kreiszylinderförmige Grundform meint, dass gewisse Abweichungen von der exakten Kreiszylinderform zulässig sind. In einem Beispiel kann der erste Vorform-Abschnitt und/oder der zweite Vorform-Abschnitt eine kreiszylinderförmige Grundform haben, aber durch eine Abflachung von der exakten Kreiszylinderform abweichen. Die Abflachung kann sich über die gesamte Länge des jeweiligen Vorform-Abschnitts erstrecken und/oder parallel zur Längsachse ausgerichtet sein. Eine Abflachung kann etwa zur Markierung vorhanden sein.

In einem anderen Beispiel kann der erste Vorform-Abschnitt und/oder der zweite Vorform-Abschnitt eine kreiszylinderförmige Grundform aufweisen, aber eine oder zwei schräge Endflächen aufweisen. Schräge Endflächen können etwa beim Teilen eines Vorform-Rohlings entstehen, beispielsweise beim Sägen. Der auf das Sägeblatt wirkende Druck kann zu einer Ablenkung des Sägeblatts um wenige Grad führen.

Ein Vorform-Abschnitt kann massiv oder zumindest teilweise hohl sein. Es können beim Herstellen einer Bohrung bereits eine oder mehrere Bohrungen in einem Vorform-Abschnitt vorhanden sein, wobei die eine oder mehreren Bohrungen insbesondere parallel zur Mittellängsachse verlaufen. In einer Ausgestaltung ist der erste und/oder der zweite Vorform-Abschnitt ein Hohlzylinder mit zentraler Bohrung entlang der Mittellängsachse.

In einer Ausgestaltung ist der erste Vorform-Abschnitt und/oder der zweite Vorform-Abschnitt beim Bohren, also beim Herstellen der ersten Bohrung und/oder der zweiten Bohrung, im Wesentlichen horizontal ausgerichtet. Horizontales Bohren benötigt eine wesentlich geringere Raumhöhe und ist somit in der Regel einfacher umsetzbar. Durch das erfindungsgemäße Fügen kann trotz der verstärkten Drift beim horizontalen Bohren dennoch eine maximale Genauigkeit erreicht werden.

In einer Ausgestaltung erfolgt das Fügen durch Schweißen. Beim Schweißen wird zumindest im Bereich der Fügung die Temperatur der zu fügenden Vorform-Abschnitte derart erhöht, dass ein stoffschlüssiger Verbund hergestellt wird. Beispielsweise kann ein Erhitzen bis oberhalb der Glasübergangstemperatur erfolgen. Es hat sich gezeigt, dass durch Schweißen die Aufgabe besonders vorteilhaft gelöst werden kann.

In einer weiteren Ausgestaltung umfasst das Verfahren ein Teilen eines Vorform-Rohlings zur Herstellung des ersten Vorform-Abschnitts und des zweiten Vorform-Abschnitts. Mit anderen Worten werden die Vorform-Abschnitte vor dem Durchführen der Bohrungen hergestellt, und zwar durch Teilen eines Vorform-Rohlings.

Das Teilen meint ein mechanisches Trennen. Beispielsweise erfolgt das Teilen durch ein Trennverfahren. Insbesondere erfolgt ein Teilen etwa quer zur Längserstreckung des Vorform-Rohlings, bevorzugt in einem Winkel von 90° zur Mittellängsachse.

Es werden also aus einem Vorform-Rohling durch Teilen Vorform-Abschnitte hergestellt, die gebohrt und anschließend zu einer Vorform wieder zusammengesetzt werden.

In einer Ausgestaltung erfolgt das Teilen mit einer Säge, insbesondere mit einer Kreissäge. Es hat sich herausgestellt, dass das Sägen, insbesondere mit einer Kreissäge, ein besonders geeignetes Verfahren zum Teilen des Vorform-Rohlings ist.

In einer weiteren Ausgestaltung sind die beim Teilen erzeugten Endflächen die erste Endfläche des ersten Vorform-Abschnitts und die erste Endfläche des zweiten Vorform-Abschnitts.

Beim Teilen werden zwei neue Endflächen erzeugt. Diese entsprechen in dieser Ausführungsform den anschließend zu fügenden Endflächen. Mit anderen Worten werden die beiden Vorform-Abschnitte nach dem Bohren wieder an den Flächen verbunden, die ursprünglich miteinander verbunden waren. Auf diese Weise entspricht die Materialstruktur der Vorform-Abschnitte bzw. der hergestellten Vorform weitgehend der Materialstruktur des Vorform-Rohlings. Zudem passen die hergestellten Endflächen besonders gut zusammen. Dies hat sich als besonders vorteilhaft zur Lösung der Aufgabe erwiesen. Insbesondere im Fall von Hohlzylindern wird ein Versatz der Zentrumsbohrung vermieden.

In einer weiteren Ausgestaltung erfolgt das Fügen derart, dass eine relative Winkelposition des ersten Vorform-Abschnitts und des zweiten Vorform-Abschnitts in Bezug zu einer Längsachse der relativen Winkelposition des ersten Vorform-Abschnitts und des zweiten Vorform-Abschnitts im Vorform-Rohling entspricht. Mit anderen Worten erfolgt das Fügen derart, dass die Winkelposition in Bezug zur Mittellängsachse nach dem Fügen dieselbe ist wie vor dem Teilen. Typischerweise wird der erste Vorform-Abschnitt und/oder der zweite Vorform-Abschnitt so entlang der jeweiligen Längsachse gedreht, bis die gewünschte Winkelposition eingestellt ist. Die Längsachse ist insbesondere eine gemeinsame Längsachse der zwei Vorform-Abschnitte vor dem Fügen, die nach dem Fügen dementsprechend der Längsachse der Vorform entspricht.

Auf diese Weise kann ein etwaig von 90° abweichender Winkel beim Teilen ausgeglichen werden. So kann besonders vorteilhaft eine hohe Genauigkeit gewährleistet werden. Ein etwaig entstehender Spalt oder ein entstehender Knick in der Vorform können durch diese Ausgestaltung verhindert werden.

In einer Ausgestaltung wird vor dem Teilen eine Markierung angebracht. Die Markierung wird am Vorform-Rohling angebracht. Dies erfolgt derart, dass vor dem Fügen die relative Winkelposition des ersten Vorform-Abschnitts und des zweiten Vorform-Abschnitts anhand der Markierung eingestellt werden kann. Die Markierung wird insbesondere an der Mantelfläche des Vorform-Rohlings angebracht.

Die Markierung kann an der Außenseite des Vorform-Rohlings angebracht werden. Beispielsweise kann im Bereich der für das Teilen vorgesehenen Stelle ein insbesondere dünner Strich angebracht werden, bevorzugt parallel zur Längsachse. Beim Teilen wird der Strich dann ebenfalls geteilt. Vor dem Fügen können dann die beiden Teile des Strichs aneinander ausgerichtet werden. Auf diese Weise kann besonders einfach die ursprüngliche Winkelposition der Vorform-Abschnitte wieder eingestellt werden. So kann besonders sicher eine hohe Genauigkeit gewährleistet werden.

Alternativ oder ergänzend kann eine Markierung im Inneren des Vorform-Rohlings eingebracht werden. Beispielsweise kann eine Markerbohrung eingebracht werden, etwa parallel zur Längsachse des Vorform-Rohlings in einem Abstand zur Längsachse. So ist die Markerbohrung an einer Position angebracht, die eine Drehsymmetrie aufbricht. Auf diese Weise kann die Winkelposition der zwei Vorform-Abschnitte vor dem Fügen anhand einer solchen Markerbohrung eingestellt werden. Es kann in die Markerbohrung ein Markerstab eingefügt werden, der einen vom Material des Vorform-Rohlings abweichenden Brechungsindex aufweist. Eine Markierung im Inneren des Vorform-Rohlings kann mit geringem technischen Aufwand hergestellt werden, da die Anforderungen an die Präzision der Position der Markerbohrung entlang der Achse des jeweiligen Vorform-Rohlings wesentlich geringere sind als bei den Hauptbohrungen in den Vorform-Abschnitten. Eine Markierung im Inneren des Vorform-Rohlings kann zudem zur Markierung der Kerne in der hergestellten Faser verwendet werden.

Insbesondere wird vor dem Fügen die relative Winkelposition des ersten Vorform-Abschnitts und des zweiten Vorform-Abschnitts anhand der Markierung eingestellt. Die Markierung kann auch verwendet werden, um die Winkelposition beim Bohren einzustellen.

Insbesondere erfolgt vor dem Herstellen der ersten und/oder zweiten Bohrung eine relative Ausrichtung des Bohrers und des Vorform-Abschnitts in Bezug zur Mittellängsachse derart, dass die Bohrung in einer definierten Winkelposition in Bezug zur Längsachse im Querschnitt des jeweiligen Vorform-Abschnitts hergestellt wird. So wird sichergestellt, dass die eine oder mehrere exzentrischen Bohrungen an einander entsprechenden Positionen eingebracht werden.

In einer Ausgestaltung dient die Vorform für eine Multikernfaser. Insbesondere werden mehrere erste Bohrungen ausgehend von der ersten Endfläche des ersten Vorform-Abschnitts durchgeführt. Insbesondere werden mehrere zweite Bohrungen ausgehend von der ersten Endfläche des zweiten Vorform-Abschnitts durchgeführt. Insbesondere sind die ersten Bohrungen parallel zueinander und/oder zur Längsachse des ersten Vorform-Abschnitts. Insbesondere sind die zweiten Bohrungen parallel zueinander und/oder zur Längsachse des ersten Vorform-Abschnitts.

Eine Multikernfaser ist eine Kernfaser mit mehreren Kernen. Die konkrete Anzahl der Kerne ist für das Verfahren unerheblich. Beispielsweise kann die Multikernfaser zwei, vier oder mehr Kerne aufweisen.

Insbesondere entspricht die Anzahl der ersten Bohrungen der Anzahl der zweiten Bohrungen. Insbesondere sind die ersten Bohrungen im ersten Vorform-Abschnitt und die zweiten Bohrungen im zweiten Vorform-Abschnitt an einander entsprechenden Positionen angeordnet. Damit ist gemeint, dass nach dem Fügen durchgehende Bohrungen vorliegen, die sich über die gesamte Länge der Vorform erstrecken.

In einer Ausgestaltung weist die Vorform eine Länge von mehr als 1,5 m, insbesondere wenigstens 2,0 m auf. Die Länge kann wenigstens 2,5 m, insbesondere ungefähr 3,0 m betragen. Mit bisherigen Verfahren ist eine Vorform mit dieser Länge nicht mit der erforderlichen Genauigkeit herstellbar.

In einer Ausgestaltung weist der erste Vorform-Abschnitt und/oder der zweite Vorform-Abschnitt eine Länge von maximal 1,5 m auf. Die Länge kann maximal 1,25 m oder 1,0 m betragen. Die Länge kann mindestens 0,5 m oder 0,75 m betragen. Beispielsweise sind beide Vorform-Abschnitte gleich lang. Um eine maximale Genauigkeit zu erreichen, hat sich eine derartige Länge als besonders vorteilhaft erwiesen.

In einer weiteren Ausgestaltung ist ein Verhältnis einer Länge der Vorform zu einem Durchmesser der ersten Bohrung und/oder der zweiten Bohrung größer als 35, insbesondere größer als 50. Mit steigendem Verhältnis der Länge der Vorform zum Durchmesser der Bohrung erhöht sich die Drift, die der erforderlichen Genauigkeit entgegenwirkt. Durch die erfindungsgemäße Lösung sind derartige Verhältnisse bei großer Genauigkeit möglich.

Ein weiterer Aspekt der Erfindung ist eine Vorform für eine optische Faser, insbesondere für eine Multikernfaser. Die Vorform ist herstellbar oder hergestellt mit dem erfindungsgemäßen Verfahren. Ein Verhältnis einer Länge der Vorform zu einem Durchmesser der ersten Bohrung und/oder der zweiten Bohrung ist größer als 35, insbesondere größer als 50. Alternativ oder ergänzend beträgt eine Länge der Vorform mehr als 1,5 m, insbesondere wenigstens 2,0 m. eine derartige Vorform ist mit herkömmlichen Verfahren nicht herstellbar. Alle Vorteile, Merkmale, und Ausgestaltungen des eingangs beschriebenen Verfahrens können analog für die Vorform gelten und umgekehrt.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben ist. Die beanspruchten Schutzbereiche sind nicht auf die Ausführungsbeispiele beschränkt.

Es zeigen:
- Figuren 1 und 2:: Querschnittszeichnungen von Vorformen,
- Figur 3:: eine schematische Darstellung eines Bohrprozesses,
- Figur 4:: eine schematische Darstellung eines Vorform-Abschnitts,
- Figuren 5 und 6:: schematische Darstellungen von Verfahrensschritten zur Herstellung einer Vorform,
- Figuren 7 bis 9:: schematische Darstellungen anderer Verfahrensschritte zur Herstellung einer Vorform,
- Figuren 10 bis 12:: schematische Darstellungen von Verfahrensschritten beim Herstellen von Vorform-Abschnitten, sowie
- Figur 13:: eine Querschnittszeichnung eines Vorform-Rohlings mit einer Markierung.

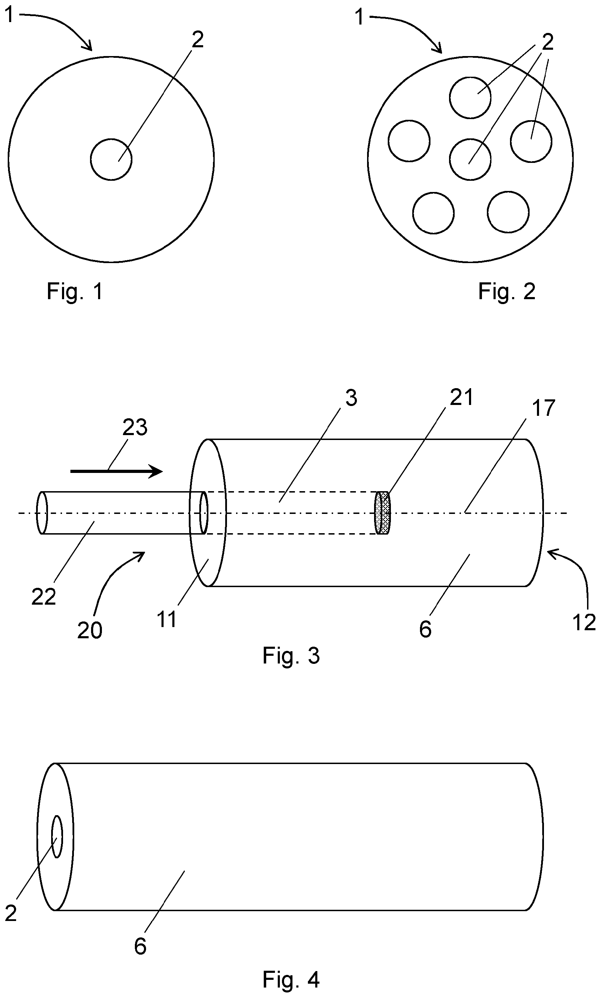

Die Figuren 1 und 2 zeigen beispielhaft Querschnitte unterschiedlicher Vorformen 1, die erfindungsgemäß hergestellt werden können. Die Vorformen weisen jeweils einen kreisförmigen Querschnitt auf. Die Vorformen 1 enthalten typischerweise eine zentrale Bohrung 2, die entlang der Mittellängsachse der jeweiligen Vorform 1 verläuft. Eine jeweilige Bohrung 2 kann sich aus ersten Bohrungen oder zweiten Bohrungen der jeweiligen Vorform-Abschnitte zusammensetzen.

In Figur 2 sind neben der optionalen zentralen Bohrung 2 beispielhaft fünf exzentrische Bohrungen 2 vorhanden. Diese sind beispielsweise regelmäßig verteilt auf einem Kreis angeordnet, der konzentrisch zur äußeren Kontur der Vorform 1 angeordnet sein kann.

Figur 3 zeigt schematisch ein Bohrverfahren zur Herstellung einer Bohrung 3 in einem ersten Vorform-Abschnitt 6. Ein Bohrer 20 wird entlang einer Richtung 23 parallel zur Längsachse 17 des Vorform-Abschnitts 6 bewegt und dreht sich insbesondere dabei um seine Längsachse. Der Bohrer 20 umfasst typischerweise einen Bohrkopf 21, der von einer Bohrstange 22 angetrieben wird. Diese Komponenten sind hier rein schematisch gezeigt; üblicherweise weist die Bohrstange 22 einen geringeren Durchmesser auf als der Bohrkopf 21. Die Bohrstange 22 wird beispielsweise von einer nicht dargestellten Antriebseinheit angetrieben.

Es ist ersichtlich, dass der Bohrer 20 an der ersten Endfläche 11 in den ersten Vorform-Abschnitt 6 eingedrungen ist und von dort ausgehend die erste Bohrung 3 herstellt. Die erste Bohrung 3 ist hier rein beispielhaft eine zentrale Bohrung.

Figur 4 zeigt den so vorbereiteten ersten Vorform-Abschnitt 6 mit der ersten Bohrung 3. Das in den Figuren 3 und 4 Gezeigte und oben Beschriebene gilt analog für eine Bohrung 4 in einem zweiten Vorform-Abschnitt 7.

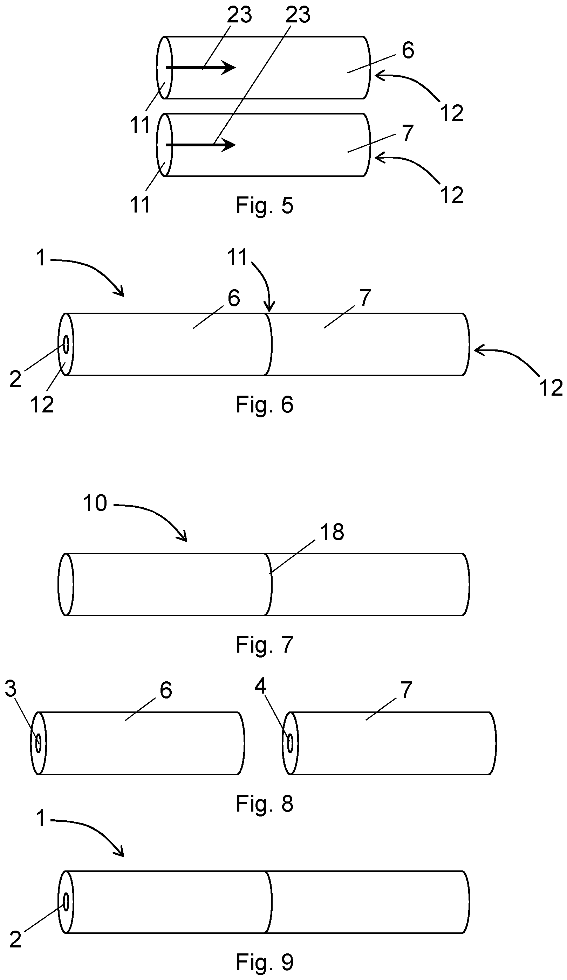

Figur 5 zeigt schematisch die Herstellung einer ersten Bohrung in einem ersten Vorform-Abschnitt 6, ausgehend von der ersten Endfläche 11, und die Herstellung einer zweiten Bohrung in einem zweiten Vorform-Abschnitt 7, ausgehend von der ersten Endfläche 11. Der Pfeil 23 zeigt die Richtung der Bewegung des jeweiligen Bohrers an. Die jeweilige zweite Endfläche 12 ist auf der jeweils gegenüberliegenden Stirnseite des jeweiligen Vorform-Abschnitts 7, 8 angeordnet.

Figur 6 zeigt das anschließende Fügen der so vorbereiteten Vorform-Abschnitte 6, 7 zur Herstellung der Vorform 1. Die Vorform-Abschnitte 6, 7 sind derart zueinander positioniert worden, dass die ersten Endflächen 11 einander zugewandt sind und einander kontaktieren. Es ist dafür typischerweise wenigstens ein Vorform-Abschnitt um eine z. B. senkrecht zu seiner Längsachse verlaufende Achse gedreht worden. Dies kann beispielsweise nach dem Herstellen der Bohrung in dem betreffenden Vorform-Abschnitt erfolgt sein. In dieser Ausrichtung erfolgt nun das Fügen der zwei Vorform-Abschnitte 6, 7. Die Längsachsen der zwei Vorform-Abschnitte 6, 7 fallen dabei zusammen und entsprechen der Längsachse der so hergestellten Vorform.

An den entgegengesetzten äußeren Stirnseiten befinden sich somit die zweiten Endflächen 12. Das Fügen der ersten Endflächen 11, an denen die Position der jeweiligen Bohrung 3, 4 in Bezug zum Querschnitt exakt festgelegt ist und keiner Drift unterliegt, sorgt für eine sehr gute Genauigkeit. Auf diese Weise kann eine Vorform 1 mit einer Länge von z. B. 3 m hergestellt werden. Insbesondere werden die Vorform-Abschnitte 6, 7 verschweißt.

Die Figuren 7 bis 9 zeigen weitere Verfahrensschritte zur Herstellung der Vorform. Es wird gemäß Figur 7 ein Vorform-Rohling 10 an einer Teilungsposition 18 geteilt, beispielsweise durch Sägen. So entstehen der erste Vorform-Abschnitt 6 und der zweite Vorform-Abschnitt 7. Anschließend erfolgt das Bohren, z. B. gemäß der Figur 5 und/oder 3. Figur 8 zeigt die anschließende Situation, in der die Vorform-Abschnitte 6, 7 mit jeweiligen Bohrungen 3, 4 versehen sind und gefügt werden können. Nach dem Fügen liegt, wie in Figur 9 dargestellt, eine Vorform mit einer durchgehenden Bohrung 2 vor.

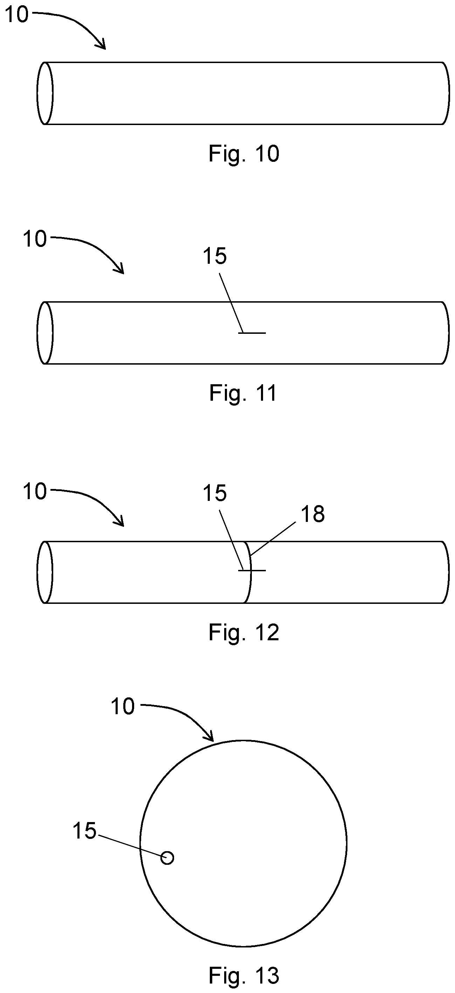

Die Figuren 10 bis 12 zeigen weitere Verfahrensschritte zum Teilen des Vorform-Rohlings 10. Zunächst wird, wie in Figur 15 dargestellt, eine Markierung 15 an der Außenseite des Vorform-Rohlings 10 angebracht. Die Markierung 15 ist hier beispielhaft als axial ausgerichteter Strich dargestellt. Die Markierung 15 verläuft über beide Seiten des Vorform-Rohlings 10, wie in Figur 12 anhand der eingezeichneten Teilungsposition 18 erkennbar ist. Durch die Markierung 15 kann nach dem Teilen und dem Bohren und vor dem Fügen die ursprüngliche relative Winkelposition der Vorform-Abschnitte 6, 7 im Vorform-Rohling wiederhergestellt werden.

Figur 13 zeigt einen Querschnitt eines Vorform-Rohlings 10. Dieser umfasst als Markierung 15 eine exzentrische Markerbohrung in seinem Inneren. Die Markerbohrung verläuft parallel zur Mittellängsachse des Vorform-Rohlings 10 in einem Abstand zu dieser. Die Markerbohrung kann, wie in den Figuren 11 und 12 gezeigt und oben beschrieben, vor dem Teilen hergestellt werden und vor dem Fügen zur relativen Ausrichtung der Vorform-Abschnitte 6, 7 verwendet werden.

### Bezugszeichenliste

| | |
|---|---|
| Vorform | 1 |
| Bohrung | 2 |
| Erste Bohrung | 3 |
| Zweite Bohrung | 4 |
| Erster Vorform-Abschnitt | 6 |
| Zweiter Vorform-Abschnitt | 7 |
| Vorform-Rohling | 10 |
| Erste Endfläche | 11 |
| Zweite Endfläche | 12 |
| Markierung | 15 |
| Längsachse | 17 |
| Teilungsposition | 18 |
| Bohrer | 20 |
| Bohrkopf | 21 |
| Bohrstange | 22 |
| Richtung | 23 |

## Patentansprüche

1. Verfahren zur Herstellung einer Vorform (1) für eine optische Faser, umfassend:
- Herstellen einer ersten Bohrung (3) in einem ersten Vorform-Abschnitt (6) ausgehend von einer ersten Endfläche (11) des ersten Vorform-Abschnitts (6),
- Herstellen einer zweiten Bohrung (4) in einem zweiten Vorform-Abschnitt (7) ausgehend von einer ersten Endfläche (11) des zweiten Vorform-Abschnitts (7),
- Fügen des ersten Vorform-Abschnitts (6) und des zweiten Vorform-Abschnitts (7) derart, dass die erste Endfläche (11) des ersten Vorform-Abschnitts (6) und die erste Endfläche (11) des zweiten Vorform-Abschnitts (7) miteinander verbunden werden.

2. Verfahren nach Anspruch 1, wobei der erste Vorform-Abschnitt (6) und/oder der zweite Vorform-Abschnitt (7) zylinderförmig sind.

3. Verfahren nach einem der vorhergehenden Ansprüche, wobei der erste Vorform-Abschnitt (6) und/oder der zweite Vorform-Abschnitt (7) eine kreiszylinderförmige Grundform aufweisen.

4. Verfahren nach dem vorhergehenden Anspruch, wobei der erste Vorform-Abschnitt (6) und/oder der zweite Vorform-Abschnitt (7) beim Bohren im Wesentlichen horizontal ausgerichtet ist.

5. Verfahren nach einem der vorhergehenden Ansprüche, wobei das Fügen durch Schweißen erfolgt.

6. Verfahren nach einem der vorhergehenden Ansprüche, wobei das Verfahren ferner umfasst:
- Teilen eines Vorform-Rohlings (10) zur Herstellung des ersten Vorform-Abschnitts (6) und des zweiten Vorform-Abschnitts (7).

7. Verfahren nach dem vorhergehenden Anspruch, wobei das Teilen mit einer Säge erfolgt, insbesondere mit einer Kreissäge.

8. Verfahren nach einem der zwei vorhergehenden Ansprüche, wobei die beim Teilen erzeugten Endflächen die erste Endfläche (11) des ersten Vorform-Abschnitts (6) und die erste Endfläche (11) des zweiten Vorform-Abschnitts (7) sind.

9. Verfahren nach dem vorhergehenden Anspruch, wobei das Fügen derart erfolgt, dass eine relative Winkelposition des ersten Vorform-Abschnitts (6) und des zweiten Vorform-Abschnitts (7) in Bezug zu einer Längsachse (17) der relativen Winkelposition des ersten Vorform-Abschnitts (6) und des zweiten Vorform-Abschnitts (7) im Vorform-Rohling (10) entspricht.

10. Verfahren nach dem vorhergehenden Anspruch, wobei vor dem Teilen eine Markierung (15) derart angebracht wird, dass vor dem Fügen die relative Winkelposition des ersten Vorform-Abschnitts (6) und des zweiten Vorform-Abschnitts (7) anhand der Markierung (15) eingestellt werden kann.

11. Verfahren nach einem der vorhergehenden Ansprüche, wobei die Vorform (1) für eine Multi-Kernfaser dient, wobei mehrere erste Bohrungen (3) ausgehend von der ersten Endfläche (11) des ersten Vorform-Abschnitts (6) durchgeführt werden, wobei mehrere zweite Bohrungen (4) ausgehend von der ersten Endfläche (11) des zweiten Vorform-Abschnitts (7) durchgeführt werden.

12. Verfahren nach einem der vorhergehenden Ansprüche, wobei die Vorform (1) eine Länge von mehr als 1,5 m, insbesondere wenigstens 2,0 m aufweist.

13. Verfahren nach einem der vorhergehenden Ansprüche, wobei der erste Vorform-Abschnitt (6) und/oder der zweite Vorform-Abschnitt (7) eine Länge von maximal 1,5 m aufweist.

14. Verfahren nach einem der vorhergehenden Ansprüche, wobei ein Verhältnis einer Länge der Vorform (1) zu einem Durchmesser der ersten Bohrung (3) und/oder der zweiten Bohrung (4) größer als 35 ist, insbesondere größer als 50.

15. Vorform (1) für eine optische Faser, insbesondere für eine Multikernfaser, herstellbar mit dem Verfahren gemäß einem der vorhergehenden Ansprüche, wobei
- ein Verhältnis einer Länge der Vorform (1) zu einem Durchmesser der ersten Bohrung (3) und/oder der zweiten Bohrung (4) größer als 35 ist, insbesondere größer als 50, und/oder
- eine Länge der Vorform (1) mehr als 1,5 m beträgt, insbesondere wenigstens 2,0 m.
